# DEMANDE DE BREVET EUROPEEN

(11) **EP 0 907 035 A1**
(43) Date de publication de la demande: **07.04.1999**
(21) Numéro de dépôt: 98401980.2
(22) Date de dépôt: 04.08.1998
(51) Int. Cl.: F16D 65/56

(54) **Entretoise de réglage automatique d'usure pour frein à tambour et frein à tambour équipé d'une telle entretoise**

(30) Priorité: 03.09.1997 FR 9710959
(71) Demandeur: Fren J Roulunds SA, 60240 Chaumont en Vexin (FR)
(72) Inventeur: Butte, Alexandre, 65520 Le Touquet (FR); Fayet, Michel, 69130 Ecully (FR); Monier, Patrick, 74350 Cruseilles (FR); Lonjou, Philippe, 69350 Brignais (FR)
(74) Mandataire: Dawidowicz, Armand

(57) **Abrégé**

L'invention concerne une entretoise (1) de réglage ou de rattrapage automatique d'usure pour frein à tambour, destinée à être montée au voisinage de moyens de serrage disposés aux premières extrémités de deux segments garnis d'éléments de friction, ladite entretoise (1) étant constituée d'un corps (2) d'entretoise et d'un système vis (31)/écrou (4) irréversible, ladite entretoise (1) comportant des moyens de commande du système vis/écrou et l'écrou (4) étant disposé à coulissement dans le corps (2) d'entretoise pendant une course de freinage initiale constante, les moyens de commande du système vis (31)/écrou (4) devenant actifs dès l'apparition d'un allongement de ladite course de freinage constante pour faire pivoter l'écrou (4) par rapport à la vis (31), lesdits moyens de commande comportant un système à roue libre unidirectionnelle (5).

L'invention consiste en ce que l'écrou (4) est solidaire en translation du système à roue libre (5) et lesdits moyens de commande comportent en outre un organe (61) coopérant avec la bague externe dudit système à roue libre (5) et guidé selon une trajectoire présentant une portion rectiligne parallèle à la direction du coulissement de l'écrou (4), correspondant à la course de freinage constante, prolongée d'une portion curviligne de rattrapage d'usure.

Application au frein à tambour

## Description

La présente invention concerne un dispositif de réglage automatique d'usure pour un frein à friction, en particulier un frein à tambour pour véhicules automobiles, destiné à compenser automatiquement l'usure des garnitures de friction associées aux segments de frein afin de maintenir la course au niveau de la pédale de frein et de la commande mécanique si le frein en est équipé, nécessaire à la mise en oeuvre de ce dernier, à un niveau sensiblement constant et faible.

Un frein à tambour de ce type comprend deux segments garnis de garnitures de friction susceptibles d'être sollicitées en engagement de friction contre un tambour tournant par des moyens de serrage, en général un cylindre de roue, disposés entre deux premières extrémités des segments, un bloc d'ancrage fixe étant disposé entre les deux autres extrémités des segments et en appui par chacune de ses extrémités sur chacun desdits deux segments. Ce type de frein présente en outre une entretoise disposée entre les segments au voisinage du cylindre de roue de façon à définir la distance séparant au repos les extrémités du segment au voisinage dudit cylindre. Lors de la mise en oeuvre du cylindre de roue, les segments sont écartés et les garnitures de friction associées aux segments sont appliquées contre le tambour du frein. Du fait de l'usure des garnitures de friction, la course de freinage est allongée. Aussi, afin de maintenir une course au niveau de la pédale de frein sensiblement faible et constante, on prévoit un dispositif de réglage automatique propre à allonger l'entretoise.

Ainsi, on a proposé des freins présentant une entretoise et un élément d'ajustement s'appliquant à une extrémité de l'entretoise de manière à maintenir un jeu déterminé entre segment et tambour en réglant l'espacement entre les segments. Dans FR-A-2 497 308, un tel dispositif est décrit dans lequel l'élément d'ajustement coopère avec une came rotative d'ajustement, ladite came coopérant avec l'élément d'ajustement sans possibilité de rotation en position normale et, lorsqu'il existe un jeu supérieur à la normale entre les segments et le tambour, l'entretoise et l'élément d'ajustement se meuvent avec un segment tendant ainsi à séparer l'élément d'ajustement et la came d'ajustement. Ladite came tend alors à tourner pour coopérer à nouveau avec l'élément d'ajustement, ce qui permet de fixer une nouvelle position rétractée des segments lorsque le dispositif d'actionnement est mis hors d'action.

On connaît également des dispositifs de rattrapage utilisant un coin d'ajustement, tel que cela est décrit dans DE-A-1 029 243 ou FR-A-2 366 488 par exemple, dans lesquels le rattrapage du jeu des segments a lieu par l'accroissement de la profondeur de pénétration d'un coin dans l'espace cunéiforme compris entre l'entretoise et le segment voisin sous l'effet d'un dispositif élastique agissant sur ce coin au cours de l'augmentation de l'usure des garnitures.

Ces deux types de dispositifs nécessitent l'utilisation d'un nombre important de pièces, ce qui rend leur montage relativement long, compliqué et onéreux.

Par GB-A-1 600 660, on connaît un dispositif de rattrapage automatique d'usure du type vis/écrou dans lequel on peut ultérieurement ajuster la course de rattrapage. Un tel dispositif comprend une vis de réglage portant l'une des extrémités dudit dispositif et s'engageant dans un écrou de réglage, un organe de liaison déplaçable axialement par rapport audit écrou et portant l'autre extrémité de raccordement dudit dispositif de réglage, ledit organe de liaison étant muni d'une douille pouvant tourner par rapport audit organe. On prévoit également un assemblage à fente inclinée et un axe disposé entre la douille et l'organe de liaison de telle sorte que la douille tourne pendant un mouvement axial de l'organe de liaison, ainsi qu'un embrayage unidirectionnel à accouplement par complémentarité de forme prévu entre la douille et ledit écrou, chacun présentant une denture à complémentarité de forme. On dispose en outre un élément d'arrêt entre la partie d'accouplement avec l'embrayage unidirectionnel prévue sur l'écrou et celui-ci de sorte que l'écrou est relié solidaire en rotation avec ladite partie d'accouplement pendant le rattrapage d'usure du frein et qu'il peut être mis en rotation par rapport à la partie d'accouplement pendant le réajustement du dispositif de rattrapage.

Lorsqu'on actionne le frein, si la course est plus longue du fait d'une usure, l'organe de liaison a un déplacement axial transformé, par l'assemblage à fente inclinée et axe, en un mouvement de pivotement dans le sens d'un débrayage de l'embrayage unidirectionnel. La denture de la douille tourne dans le sens d'un passage de dent tandis que le relâchement de la course de freinage entraîne la rotation de la douille dans un sens de rotation opposé et verrouille l'embrayage unidirectionnel, ce qui provoque la rotation de l'écrou sur la vis.

Dans GB-A-1 304 557, on a proposé un dispositif de rattrapage similaire dans lequel on autorise la rotation d'un système vis/écrou en désaccouplant un dispositif d'embrayage unidirectionnel à dents par l'entraînement en rotation d'un élément suivant une fente inclinée lors de la course de freinage, puis en permettant de nouveau l'accouplement dudit système d'embrayage lors de la course retour et, si une dent dudit système d'embrayage a été sautée, on provoque la rotation du système vis/écrou lors de l'accouplement. Ce dispositif est très complexe et ne permet que des ajustements par saints de paliers.

Par DE-A-23 45 470, on a proposé un dispositif d'ajustement de type vis/écrou. Ce dispositif prévoit un dispositif à cliquet verrouillant un embrayage unidirectionnel tel qu'un engrenage à dents. Dans ce dispositif, on obtient donc également un ajustement de l'entretoise mais par paliers successifs du fait de l'engrenage à dents.

Ces dispositifs permettent donc une compensation de l'usure des éléments de friction par un allongement de l'entretoise, les embrayages unidirectionnels utilisés permettant en outre de conserver cet allongement de manière simple. Cependant, cet allongement s'effectue par paliers successifs, chaque palier correspondant à une dent au niveau d'un embrayage unidirectionnel à dents. De tels dispositifs de rattrapage ne permettent donc pas une compensation systématique de l'usure au fur et à mesure que celle-ci apparaît, l'usure devant présenter une certaine valeur avant de pouvoir être compensée.

On connaît également, par US-A-2 570 398, un frein à tambour pourvu d'un dispositif de réglage automatique constitué par un système à rochet agissant sur un système vis/écrou de manière à allonger l'entretoise au fur et à mesure de l'usure des garnitures ou éléments de friction. La démultiplication obtenue à l'aide d'un tel dispositif permet un réglage par approches successives et permet en outre d'éviter un surréglage du à un échauffement temporaire des pièces.

Dans des dispositifs de réglage automatique de ce type, le levier d'actionnement du système vis/écrou peut être soit monté sur l'un des segments du frein tel que cela est décrit dans US-A-4 401 195 par exemple, ou bien ledit levier d'actionnement peut être une lame élastique porteuse d'un cliquet monté directement sur l'entretoise tel que cela est décrit, en particulier, dans EP-A-0 077 726.

Dans ces deux cas, l'entretoise est avantageusement constituée de deux parties coulissantes l'une par rapport à l'autre selon une course correspondant à la course normale d'application des éléments de friction contre le tambour de frein. L'allongement de l'entretoise résultant du dispositif de réglage automatique permet donc d'obtenir une position au repos de l'écartement des seqments propre à conserver cette course d'actionnement relativement constante.

Bien que ces derniers dispositifs soient d'un montage plus simple que les précédents, ils nécessitent également l'utilisation d'un nombre encore important de pièces à monter, en particulier des ressorts. D'autre part, ils font appel à des moyens complexes pour rendre le système vis/écrou inactif au cours du rapprochement des segments après freinage, les leviers portant le cliquet d'actionnement de l'écrou devant être désengagés dudit écrou. De plus, l'allongement de l'entretoise s'effectue par paliers successifs et non pas de manière continue et progressive.

Afin d'obtenir un ajustage automatique pour un frein à tambour intervenant dès que la course de freinage augmente du fait d'une usure et sans palier, on connaît des dispositifs d'ajustement comportant plusieurs systèmes de vissage distincts réversibles et non réversibles et faisant appel à des couples de frottement entre les pièces pour commander ou empêcher le déplacement relatif des pièces vissées ensemble (voir par exemple US-A-3 774 733). Un tel dispositif permet un ajustement dès l'apparition d'une usure et sans palier. Cependant, ce type de dispositif utilise de petites pièces présentant des filetages dont la réalisation doit être suffisamment précise pour permettre un bon fonctionnement du dispositif, ce qui rend relativement complexe et coûteux le mode de réalisation du dispositif.

Par US-A-4 071 123, on a proposé un dispositif d'ajustement permettant de compenser l'usure des éléments de friction des freins en définissant de nouvelles positions de repos des extrémités des segments. Ce dispositif comprend un organe extensible du type vis/écrou, deux organes élastiques annulaires qui sont engagés en prise dans des portions cylindriques correspondantes de l'organe extensible et une came qui entraîne en rotation les organes élastiques l'un par rapport à l'autre dans une première direction lors du freinage et dans la direction opposée lors de la course retour pour limiter l'extension de l'organe extensible à une valeur prédéterminée.

Une extrémité de chaque organe élastique ou ressort est engagée dans une fente oblique d'un manchon. Lors de la course de freinage, l'un des ressorts impose un entraînement en rotation au système vis/écrou en vue d´un allongement et, lors de la course retour, c'est l'autre ressort qui entraîne en rotation, dans le sens inverse, le système vis/écrou. Ce dispositif permet donc bien une compensation de l'usure au fur et à mesure de son apparition et sans palier, mais la structure de ce dispositif est très complexe et nécessite un nombre élevé de pièces. En outre, il utilise des propriétés relatives aux forces de frottement des organes élastiques, caractéristiques qu'il n'est pas toujours possible de contrôler et qui peuvent subir des altérations au cours de la vie du frein du fait de l'usure par frottement ou de la chaleur.

Dans US-A-2 173 577, on a proposé un dispositif d'ajustement automatique d'un frein, au niveau de l'actionnement de freins et non sur une entretoise, comprenant une roue libre en tant que système à embrayage unidirectionnel, associée à un système vis/écrou. Ainsi, la partie interne du système à embrayage unidirectionnel est solidaire de la vis du système vis-écrou tandis que la partie externe dudit système unidirectionnel comporte une rainure oblique dans laquelle se déplace la tête d'une vis fixe dans le carter entourant le dispositif. Lorsqu'on actionne le frein, la tête de la vis est libre de se déplacer axialement dans la rainure oblique, d'une paroi de ladite rainure à la paroi opposée, ce déplacement correspondant à une course de freinage normale. Si on dépasse la course normale, la tête de la vis bute contre ladite paroi opposée de la rainure, ce qui provoque l'entraînement en rotation de la partie externe du système unidirectionnel selon un premier sens de rotation mais sans entraîner la partie interne de celui-ci. Lors de la course retour après freinage, la tête de vis se déplace de nouveau axialement dans la rainure oblique d'une paroi à la paroi opposée mais, comme la course a été auqmentée lors du freinage, elle bute contre ladite paroi opposée et provoque l'entraînement en rotation de la partie externe du système dans un second sens de rotation qui entraîne alors la partie interne du système. Celle-ci étant solidaire de la vis du système vis/écrou, elle provoque l'entraînement de la vis dans le sens d'un allongement pour compenser l'usure.

L'inconvénient de ce dispositif réside dans le fait que la tête de vis, montée dans le carter, est engagée libre dans une rainure oblique de manière à se déplacer axialement d'une paroi à l'autre de ladite rainure. Ce type de dispositif est destiné en outre à être monté dans le carter d'actionnement des freins sur des organes généralement soumis à des conditions de vibrations très élevées. Ces vibrations peuvent entraîner des déplacements intempestifs de la tête de vis dans la rainure, ce qui fausse le déplacement de ladite vis dans la rainure et, donc, l'ajustement automatique du frein alors même qu'on est dans le carter renfermant les moyens d'actionnement des freins et non sur une entretoise.

Afin de pallier ces inconvénients, la présente invention propose une entretoise comportant un dispositif d'allongement automatique propre à compenser de manière continue et progressive l'usure des éléments de friction, c'est-à-dire au fur et à mesure que ladite usure apparaît à chaque course de freinage, même pour des valeurs d'usure infimes, et sans avoir besoin de passer un palier, au fur et à mesure de l'utilisation du frein, ladite entretoise étant de construction et de montage simples et économiques et de fonctionnement sûr.

A cet effet, l'invention a pour objet une entretoise de réglage ou de rattrapage automatique d´usure pour frein à tambour, destinée à être montée au voisinage de moyens de serrage disposés aux premières extrémités de deux segments garnis d'éléments de friction, ladite entretoise étant constituée d'un corps d'entretoise et d'un système vis/écrou irréversible, ledit corps d'entretoise comportant une extrémité en appui sur l'un des segments et présentant, à son autre extrémité, un alésage axial dans lequel est engagée à coulissement la vis du système vis/écrou, entre une position de repos des segments et une position de freinage correspondant à l'application des éléments de friction sur le tambour du frein, l'autre extrémité du système vis/écrou étant en appui sur le second segment, ladite entretoise comportant des moyens de commande du système vis/écrou et l'écrou étant disposé à coulissement dans le corps d'entretoise pendant une course de freinage initiale constante, les moyens de commande du système vis/écrou devenant actifs dès l'apparition d'un allongement de ladite course de freinage constante pour faire pivoter l'écrou par rapport à la vis, lesdits moyens de commande comportant un système à roue libre unidirectionnelle, caractérisée en ce que l'écrou est solidaire en translation du système à roue libre et lesdits moyens de commande comportent en outre un organe coopérant avec la bague externe dudit système à roue libre et guidé selon une trajectoire présentant une portion rectiligne parallèle à la direction du coulissement de l'écrou, correspondant à la course de freinage constante, prolongée d'une portion curviligne de rattrapage d'usure.

En effet, la course de freinage nécessaire pour appliquer les éléments de friction contre le tambour, lorsqu' il n'y a pas d'usure, définit un simple coulissement en translation de l'écrou dans le corps d'entretoise, ce qui correspond à la portion rectiligne de la trajectoire de l'organe guidé des moyens de commande lors d'un freinage. Lorsque l'usure des éléments de friction apparaît, afin de maintenir la course de freinage relativement constante et faible, il est nécessaire d'allonger l'entretoise. Or, dès que cette usure apparaît et provoque l'allongement de la course de freinage, la simple course en translation de l'écrou dans le corps d'entretoise ne correspond plus à la course de freinage constante initiale. Il est donc nécessaire, sous l'effet de la traction supplémentaire exercée sur les segments du fait de l'allongement de la course, de provoquer un allongement de l'entretoise, pour compenser l'usure de telle sorte que lors d'une course de freinage ultérieure, on retrouve une course de freinage constante similaire à la course de freinage initiale.

De ce fait, il convient donc de rendre actifs les moyens de commande du système vis/écrou dès l'apparition de cet allongement de la course pour provoquer un entraînement en rotation dudit écrou dans le sens d'un dévissage du système vis/écrou de manière à produire un allongement de l'entretoise correspondant à un allongement de la course. Lors de la course retour de l'écrou, les moyens de commande du système vis/écrou sont inactifs, de sorte que l'écrou et la vis subissent une translation pure.

Le jeu entre les éléments de friction et le tambour dû à l'usure est donc immédiatement compensé lors d'un freinage, le réglage se faisant ainsi de manière continue au fur et à mesure de l'utilisation du frein par l'allongement progressif de l'entretoise.

Ainsi, l'écrou est solidaire en translation du système à roue libre unidirectionnelle, la bague interne dudit système étant de préférence solidaire de l'écrou. De manière avantageuse, l'organe guidé, au cours de la course de freinage sous l'effet de la traction exercée sur l'entretoise par les segments, est donc guidé selon une trajectoire présentant une portion rectiligne correspondant à un entraînement en coulissement de l'écrou pendant une course de freinage initiale constante prolongée d'une portion curviligne de rattrapage d'usure, ladite portion curviligne étant agencée pour produire, en coopération avec l'organe guidé, un entraînement en rotation de la bague externe du système à roue libre dans le sens du dévissage de l'écrou, la bague externe étant solidaire en rotation de la bague interne dudit système à roue libre, de manière à autoriser un allongement de l'entretoise lors d'un allongement de la course de freinage du fait de l'usure des éléments de friction tandis que la bague externe et la bague interne sont libres en rotation relative pendant la course de retour des segments de sorte que l'écrou et la vis subissent une translation pure.

De manière avantageuse, la longueur de la portion rectiligne et celle de la portion curviligne sont adaptées en fonction du type de frein sur lequel une entretoise selon l'invention doit être montée.

Les moyens de commande selon l'invention offrent donc l'avantage d'autoriser l'allongement de l'entretoise même pour un jeu d'usure infime sans qu'il soit nécessaire de passer des paliers.

Selon une première forme de réalisation de l'invention, la bague externe du système à roue libre présente un plot en tant qu'organe guidé coopérant avec une rainure dont le profil définit la trajectoire dudit organe guidé et profilée dans le corps d'entretoise. Le profil de la rainure est agencé pour produire un entraînement en coulissement de l'écrou pendant la course de freinage initiale constante puis un entraînement en rotation de l'organe guidé qui entraîne en rotation l'écrou dans le sens du dévissage de l'écrou autorisant l'allongement du système vis/écrou par l'intermédiaire de la bague externe solidaire en rotation de la bague interne lors d'un allongement de la course de freinage du fait de l'usure des éléments de friction, tandis que la bague externe et la bague interne sont libres en rotation relative pendant la course de retour des segments.

Selon une deuxième forme de réalisation, la bague externe du système à roue libre présente à sa surface externe un profil ou courbe de guidage définissant la trajectoire contre laquelle est maintenu et guidé un plot, en tant qu'organe guidé, solidaire du corps d'entretoise. Le plot est fixe et, lorsqu'il est guidé le long de la portion curviligne du profil de guidage de la bague externe, la bague externe est entraînée en rotation dans le sens d'un dévissage de l'écrou.

Selon une variante de cette forme de réalisation, la bague externe du système à roue libre comporte une rainure définissant la trajectoire pour l'organe guidé et dans laquelle est guidé l'organe guidé solidaire du corps d'entretoise.

Selon une troisième forme de réalisation, la bague externe du système à roue libre présente un plot en tant qu'organe guidé, ledit plot étant guidé selon ladite trajectoire par coopération à pivotement avec une extrémité d'une biellette dont l'autre extrémité comporte un trou allongé ou une rainure traversé par un axe de pivotement sur le corps de l'entretoise.

De manière avantageuse, une entretoise selon l'invention permet un allongement progressif de l'entretoise pour compenser l'usure des éléments de friction, ladite entretoise étant en outre d'une structure simple ne nécessitant pas d'éléments extérieurs, en particulier qui devraient être montés sur les segments, et d'un montage facile.

Une entretoise selon l'invention permet donc une compensation de l'usure pour des valeurs infimes de ladite usure. Aussi, afin de favoriser l'irréversibilité du système vis/écrou lors de la course retour de segments, en particulier afin de surmonter les jeux pouvant exister dans le système à roue libre, et ce, même pour des valeurs infimes d'allongement du système vis/écrou, l'entretoise comporte, monté sur la vis entre la pièce d'appui solidaire de ladite vis et l'extrémité du système à roue libre, un moyen de freinage agencé pour bloquer la bague interne dudit système à roue libre lors de la course retour, après freinage.

De préférence, ledit moyen de freinage est constitué par un ressort ou tout autre moyen approprié.

L'invention a également pour objet un frein à tambour équipé d'une telle entretoise.

On décrira maintenant des exemples de réalisation de l'invention en référence au dessin annexé dans lequel :
la figure 1 représente une vue en plan d'une entretoise selon un premier mode de réalisation de l'invention, en position repos ;
la figure 2 représente une vue en élévation latérale de l'entretoise selon la figure 1, le corps d'entretoise étant partiellement arraché ;
la figure 3 représente une vue en perspective éclatée de l'entretoise selon la figure 1 ;
la figure 4 représente une vue en plan d'une entretoise selon le deuxième mode de réalisation de l'invention ;
la figure 5 représente une vue en élévation latérale d'une entretoise selon la figure 4 ;
la figure 6 représente une vue en perspective éclatée de l'entretoise selon la figure 4 ;

Une entretoise 1 de réglage automatique pour frein à tambour selon l'invention comporte un corps 2 d'entretoise et un système vis 31/écrou 4. Le corps 2 d'entretoise présente une extrémité pourvue d'une encoche 21 propre à venir en appui sur un segment du frein à tambour (non représenté) et comporte à son autre extrémité libre un alésage axial 22.

Le système vis/écrou est constitué d'un écrou 4 et d'une vis 31, l'écrou 4 étant disposé à coulissement dans le corps d'entretoise 2, une extrémité de la vis 31 étant engagée dans l'alésage 22 dudit corps 2 d'entretoise et l'extrémité libre de la vis 31 étant solidaire d'une pièce d'appui 33 pourvue d'une encoche 34 s'engageant sur l'autre segment du frein.

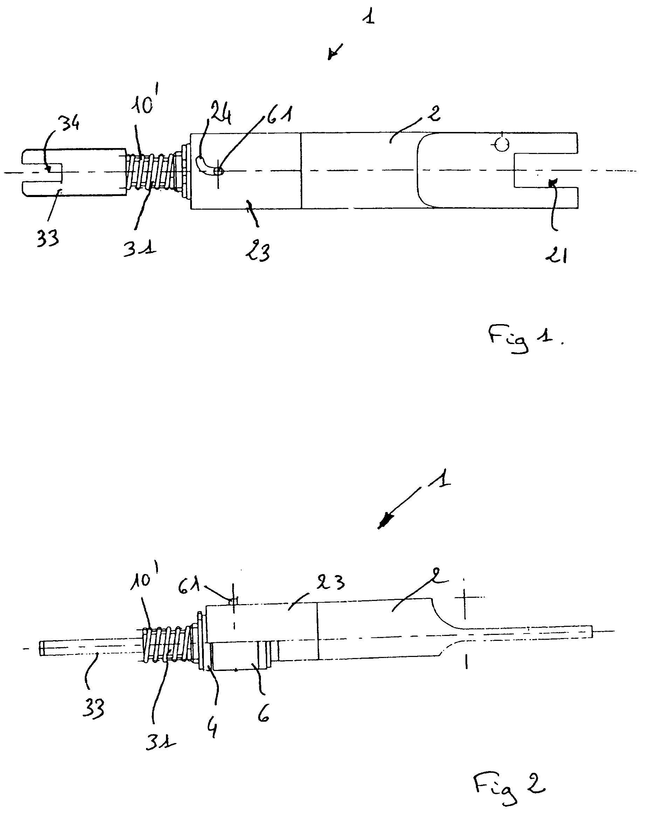

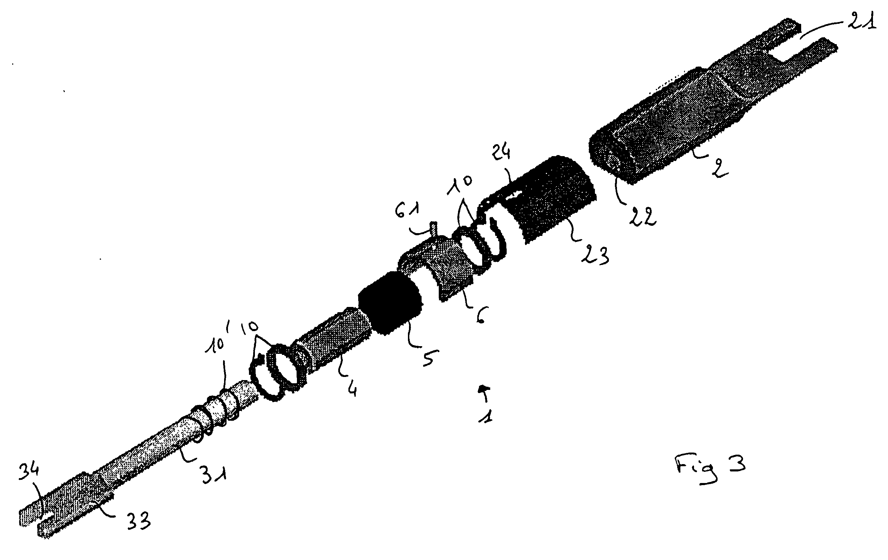

Dans le premier mode de réalisation de l'invention (figures 1, 2 et 3), l'écrou 4 est monté coulissant dans le corps 2 d'entretoise ou, plus précisément, sous un capot protecteur 23 fixé à l'extrémité libre dudit corps d'entretoise 2. Un système à roue libre unidirectionnelle 5 est monté sur l'écrou 4 de telle sorte que la bague interne du système 5 est solidaire de l'écrou 4. La bague externe du système 5 présente un plot 61 en tant qu'organe guidé, de préférence, ledit plot 61 étant porté par un segment de bague 6, de forme complémentaire et solidaire de la bague externe du système 5. Le plot 61 s'engage, lors du montage, dans une rainure profilée 24 ménagée dans le capot 23 du corps d'entretoise 2.

Ainsi qu'on peut le voir à la figure 1, en position repos de l'entretoise 1, le plot 61 est à une extrémité de la rainure 24 de telle sorte qu'une traction exercée sur l'entretoise 1 tend à déplacer le plot 61 le long de la rainure 24. Le déplacement dudit plot 61 entraîne le déplacement du segment de bague 6 solidaire de la bague externe du système à roue libre 5. L'écrou 4 suit les déplacements en translation du système 5.

Dans un premier temps, le profil de la rainure 24 définit une portion de trajectoire de l'organe guidé 61 rectiligne pour permettre un simple entraînement en translation sans rotation de l'écrou 4 correspondant initialement à une course de freinage sans usure du frein. Puis, le profil de la rainure 24 définit une portion de trajectoire de l'organe guidé 61 curviligne et provoque, en cas d'usure, l'entraînement en rotation du plot 61 et, par conséquent, l'entraînement en rotation de la bague externe du système à roue libre 5. Le sens de rotation de la bague externe par rapport à la bague interne est celui du blocage du système à roue libre 5, de sorte que l'écrou 4 est entraîné en rotation et se dévisse de la vis 31 en allongeant l'entretoise 1 d'une valeur correspondant au jeu d'usure.

Lors de la course de retour, le plot 61 suit le profil de la rainure 24 dans le sens contraire mais dans ce cas, la bague interne du système à roue libre 5 peut pivoter par rapport à la bague externe de sorte que, sur la partie curviligne de la rainure 24, le plot 61 fait pivoter la bague externe par rapport à la bague interne et l'écrou 4 est donc simplement entraîné en translation jusqu'à sa position de repos initiale correspondant à la mise en butée du plot 61 au fond de la rainure 24.

A l'actionnement suivant du frein, du fait de l'irréversibilité du système vis 31/écrou 4, la course de l'écrou 4 est à nouveau égale à la valeur constante initiale de translation pure correspondant à la longueur de la partie rectiligne de la rainure 24.

Des éléments de montage 10 additionnels tels que des rondelles, des circlips sont prévus de part et d'autre du système à roue unidirectionnelle 5. Un ressort 10' peut également être mis en place entre le système à roue libre 5 et la pièce d'appui 33 en tant que moyen de freinage bloquant la bague interne du système à roue libre 5 lors de la course retour des segments. On prévient ainsi les risques de perte de l'allongement du système vis/écrou lorsque cet allongement est faible par rapport au jeu dudit système à roue libre 5.

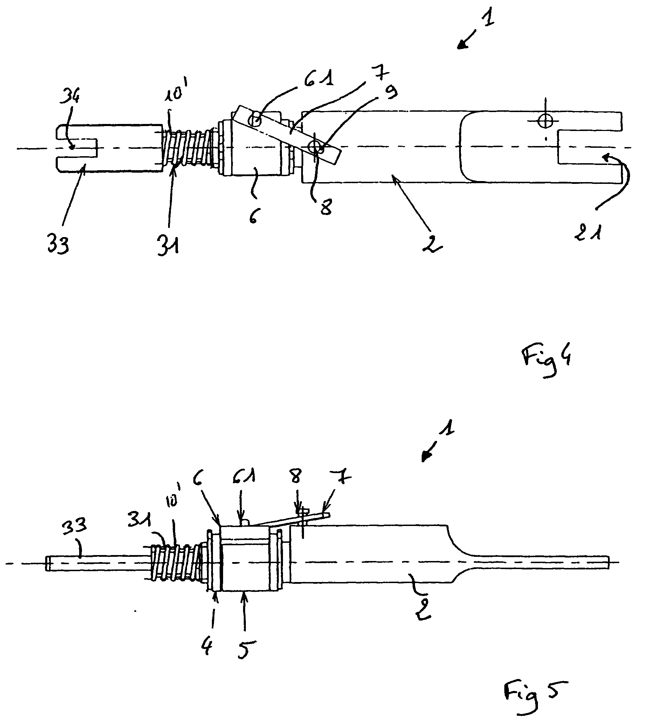

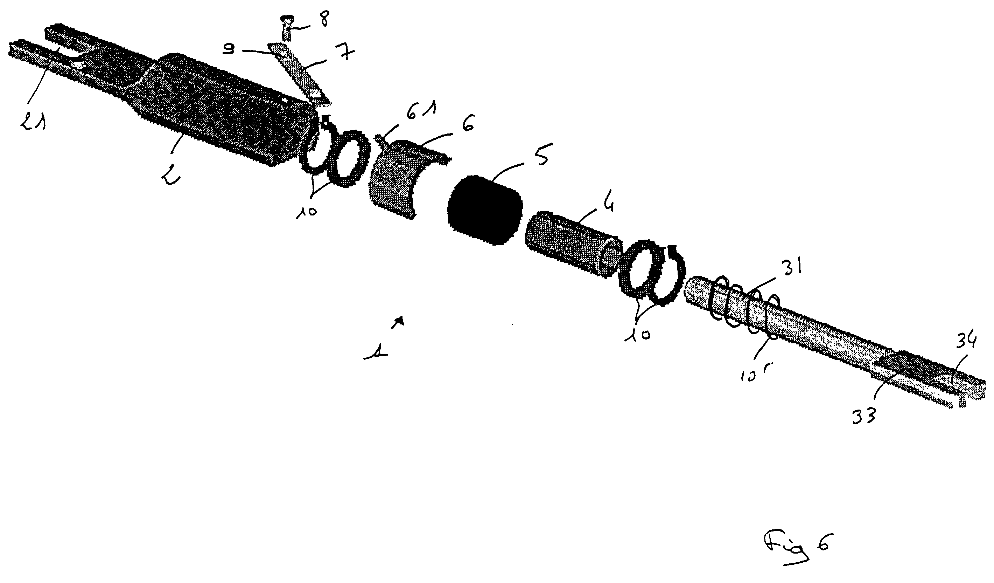

Dans le deuxième mode de réalisation (figures 4, 5 et 6), les pièces constituant l'entretoise 1 sont sensiblement les mêmes si ce n'est que le plot 61, en tant qu'organe guidé, solidaire de la bague externe du système à roue libre 5 est engagé à l'extrémité d'une biellette 7 dont l'autre extrémité est montée à pivotement sur le corps d'entretoise 2. L'axe d'articulation 8 de la biellette 7 sur le corps 2 d'entretoise est engagé dans un trou allongé 9 ou rainure ménagé à l'extrémité de la biellette 7 opposée au plot 61. Lors d'une traction exercée sur l'entretoise 1, le coulissement de l'écrou 4 en translation est autorisé par le coulissement du plot 61 dans le trou allongé 9 de la biellette 7 définissant la portion de trajectoire rectiligne de l'organe guidé 61 de manière à correspondre à une course de freinage sans usure.

Dès l'apparition d'un jeu d'usure des éléments ou garnitures de friction, la traction exercée tend à provoquer l'allongement de l'entretoise 1, la biellette 7, pivotant autour de son axe de pivotement 8 sur le corps d'entretoise 2, entraîne le plot 61 en rotation dans le sens d'un dévissage du système vis 31/écrou 4, définissant la portion de trajectoire curviligne de l'organe guidé 61 de manière à allonger l'entretoise 1, la bague externe du système à roue libre 5 étant fixe par rapport à la bague interne dans le sens de rotation.

Au retour, au contraire, la roue libre est active et la rotation inverse de la bague externe n'entraîne pas la rotation de la bague interne et le système vis 31/écrou 4 subit une translation pure. Dès que la biellette 7 est revenue parallèle à l'axe de la vis 31, le coulissement se poursuit avec un coulissement correspondant du plot 61 dans le trou allongé 9 jusqu'à butée de ce plot 61 au fond du trou allongé 9. A l'actionnement suivant du frein, la course de l'écrou 4 est à nouveau une translation de la valeur initiale constante correspondant à la course sans usure.

Dans toutes les formes de réalisation de l'invention, une entretoise unique, ou au moins une partie unique d'entretoise telle que le corps, peut servir pour des modèles différents de freins, réduisant ainsi le coût.

## Revendications

1. Entretoise (1) de réglage ou de rattrapage automatique d'usure pour frein à tambour, destinée à être montée au voisinage de moyens de serrage disposés aux premières extrémités de deux segments garnis d'éléments de friction, ladite entretoise (1) étant constituée d'un corps (2) d'entretoise et d'un système vis (31)/écrou (4) irréversible, ledit corps (2) d'entretoise comportant une extrémité en appui sur l'un des segments et présentant, à son autre extrémité, un alésage axial (22) dans lequel est engagée à coulissement la vis (31) du système vis (31)/écrou (4), entre une position de repos des segments et une position de freinage correspondant à l'application des éléments de friction sur le tambour du frein, l'autre extrémité du système vis (31)/écrou (4) étant en appui (33) sur le second segment, ladite entretoise (1) comportant des moyens de commande du système vis/écrou et l'écrou (4) étant disposé à coulissement dans le corps (2) d'entretoise pendant une course de freinage initiale constante, les moyens de commande du système vis (31)/écrou (4) devenant actifs dès l'apparition d'un allongement de ladite course de freinage constante pour faire pivoter l'écrou (4) par rapport à la vis (31), lesdits moyens de commande comportant un système à roue libre unidirectionnelle (5),
caractérisée en ce que l'écrou (4) est solidaire en translation du système à roue libre (5) et lesdits moyens de commande comportent en outre un organe (61) coopérant avec la bague externe dudit système à roue libre (5) et guidé selon une trajectoire présentant une portion rectiligne parallèle à la direction du coulissement de l'écrou (4), correspondant à la course de freinage constante, prolongée d'une portion curviligne de rattrapage d'usure.

2. Entretoise selon la revendication 1,
caractérisée en ce que la portion curviligne de la trajectoire est agencée pour produire, en coopération avec l'organe guidé, lors de la course de freinage, un entraînement en rotation de la bague externe du système à roue libre (5) dans le sens du dévissage de l'écrou (4), la bague externe étant solidaire en rotation de la bague interne dudit système à roue libre (5).

3. Entretoise selon l'une des revendications 1 et 2,
caractérisée en ce que la bague externe du système à roue libre (5) présente un plot (61) en tant qu'organe guidé coopérant avec une rainure (24) dont le profil définit la trajectoire dudit organe guidé (61) et profilée dans le corps (2) d'entretoise.

4. Entretoise selon l'une des revendications 1 et 2,
caractérisée en ce que la bague externe du système à roue libre (5) présente à sa surface externe un profil ou courbe de guidage définissant la trajectoire contre laquelle est maintenu et guidé un plot en tant qu'organe guidé, solidaire du corps d'entretoise (2).

5. Entretoise selon la revendication 4,
caractérisée en ce que la bague externe comporte une rainure définissant la trajectoire pour l'organe guidé et dans laquelle est guidé ledit organe guidé solidaire du corps d'entretoise.

6. Entretoise selon l'une des revendications 1 et 2,
caractérisée en ce que la bague externe du système à roue libre (5) présente un plot (61) en tant qu'organe guidé, ledit plot (61) étant guidé selon ladite trajectoire par coopération à pivotement avec une extrémité d'une biellette (7) dont l'autre extrémité comporte un trou allongé ou une rainure (9) traversé par un axe de pivotement (8) sur le corps (2) de l'entretoise (1).

7. Entretoise selon l'une des revendications 1 à 6,
caractérisée en ce qu'elle comporte, monté sur la vis (31) entre la pièce d'appui (33) solidaire de ladite vis (31) et l'extrémité du système à roue libre (5), un moyen de freinage agencé pour bloquer la bague interne dudit système à roue libre (5) lors de la course de retour, après freinage.

8. Entretoise selon la revendication 7,
caractérisée en ce que ledit moyen de freinage est constitué par un ressort.

9. Frein à tambour comportant une entretoise (1) de réglage ou de rattrapage automatique d'usure dudit frein, destinée à être montée au voisinage de moyens de serrage disposés aux premières extrémités de deux segments garnis d'éléments de friction, ladite entretoise (1) étant constituée d'un corps (2) d'entretoise et d'un système vis (31)/écrou (4), ledit corps (2) d'entretoise comportant une extrémité en appui sur l'un des segments et présentant, à son autre extrémité, un alésage axial (22) dans lequel est engagée à coulissement la vis (31) du système vis (31)/écrou (4) irréversible, entre une position de repos des segments et une position de freinage correspondant à l'application des éléments de friction sur le tambour du frein, l'autre extrémité du système vis (31)/écrou (4) étant en appui (33) sur le second segment, ladite entretoise (1) comportant des moyens de commande du système vis/écrou et l'écrou (4) étant disposé à coulissement dans le corps (2) d'entretoise pendant une course de freinage initiale constante, les moyens de commande du système vis (31)/écrou (4) devenant actifs dès l'apparition d'un allongement de ladite course de freinage constante pour faire pivoter l'écrou (4) par rapport à la vis (31), lesdits moyens de commande comportant un système à roue libre unidirectionnelle (5),
caractérisé en ce que l'écrou (4) est solidaire en translation du système à roue libre unidirectionnelle (5) et lesdits moyens de commande comportent en outre un organe (61) coopérant avec la bague externe dudit système à roue libre (5) guidé selon une trajectoire présentant une portion rectiligne parallèle à la direction du coulissement de l'écrou (4), correspondant à la course de freinage constante, prolongée d'une portion curviligne de rattrapage d'usure.
